(19) Europäisches Patentamt
European Patent Office
Office européen des brevets

(11) EP 3 720 897 B1

(12) FASCICULE DE BREVET EUROPEEN

(45) Date de publication et mention de la délivrance du brevet:
**05.06.2024 Bulletin 2024/23**

(21) Numéro de dépôt: **18833458.5**

(22) Date de dépôt: **07.12.2018**

(51) Classification Internationale des Brevets (IPC):
***C08G 69/40*** *(2006.01)*

(52) Classification Coopérative des Brevets (CPC):
**C08G 69/40**

(86) Numéro de dépôt international:
**PCT/FR2018/053152**

(87) Numéro de publication internationale:
**WO 2019/110944 (13.06.2019 Gazette 2019/24)**

(54) **COPOLYMERE A BLOCS RESISTANT A L'HYDROLYSE ET PERMEABLE AU CO2**

HYDROLYSEBESTÄNDIGES CO2-PERMEABLES BLOCKCOPOLYMER

HYDROLYSIS-RESISTANT, CO 2-PERMEABLE BLOCK COPOLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2017 FR 1761830**

(43) Date de publication de la demande:
**14.10.2020 Bulletin 2020/42**

(73) Titulaire: **Arkema France**
**92700 Colombes (FR)**

(72) Inventeurs:
- **DANG, Patrick**
  **27470 Serquigny (FR)**
- **PINEAU, Quentin**
  **27470 Serquigny (FR)**
- **TURAN-ALTUNTAS, Inci**
  **27470 Serquigny (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**US-A- 5 331 061**
**US-A- 5 574 128**
**US-A1- 2004 242 774**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 720 897 B1

## Description

### DOMAINE DE L'INVENTION

La présente invention concerne un nouveau copolymère à blocs rigides polyamide PA et blocs souples, tels que polyéther PE, permettant la fabrication de matériaux à la fois résistants à l'hydrolyse et perméables aux $CO_2$.

La présente invention concerne également un procédé de fabrication d'un tel copolymère et son utilisation notamment dans l'industrie du sport, dans l'industrie pétrolière et gazière, notamment dans les applications offshore, dans l'industrie automobile, dans les courroies de transmission, notamment pour l'industrie du bois, l'industrie textile, dans l'emballage, notamment alimentaire et utile dans toutes applications nécessitant à la fois un matériau résistant à l'hydrolyse et perméable au $CO_2$.

### ARRIERE-PLAN TECHNIQUE

Durant la dernière décennie les copolymères à blocs polyamide PA et blocs polyéther PE (copolymère abrégé PEBA dans la présente description), notamment ceux commercialisés par la société Arkema sous la marque Pebax®, se sont progressivement imposés dans le domaine de la chaussure haut de gamme, en particulier de sport, grâce à leurs propriétés mécaniques et notamment leur propriété de retour élastique exceptionnel.

D'autres applications typiques des PEBA se trouvent dans le domaine automobile et plus généralement dans l'industrie, notamment des courroies transport et de transmission, ou encore dans le domaine textile avec les films imper-respirants. Les Pebax® offrent un excellent compromis en termes de propriétés : élastomère thermoplastique le plus léger, large plage de dureté, gamme de flexibilité la plus large, excellentes propriétés dynamiques et faible formation de chaleur, résistance à la déchirure et aux chocs, résistance à la fatigue de souplesse, et maintien des propriétés mécaniques même en conditions extrêmes, et notamment à des températures allant de -40°C à +80 °C.

Malheureusement, pour certaines de ces applications, la résistance à l'hydrolyse et la perméabilité au $CO_2$ des systèmes de l'art antérieur, est loin d'être optimale. Ainsi, certains substrats en PEBA se dégradent rapidement sous l'effet de l'hydrolyse, ce qui se manifeste notamment par une perte en viscosité inhérente typiquement d'au moins 75% et une rapide diminution de l'allongement à la rupture par exemple passant inférieur à 15%, puis il devient impossible d'effectuer des tractions sur le matériau qui se disloque.

Le document US5331061 concerne un composé copolyétheresterétheramide à blocs. La présente invention a donc pour but de fournir un copolymère à blocs résistant à l'hydrolyse tout en ayant une perméabilité au $CO_2$ d'au moins 10000 cm3/m2/24h/atm pour un film de 25 $\mu$m d'épaisseur.

La présente invention a aussi pour but de fournir un copolymère à blocs facilement extrudable même en tuyaux de gros diamètres, présentant un allongement à la rupture supérieur à 350% selon la norme ISO 527 1A :2012, et une viscosité inhérente stable, qui ne diminue pas de plus de 25% même lorsque ledit copolymère est soumis à des conditions extrêmes d'hydrolyse, par exemple au fond de la mer, ou en climat tropical ou très humide.

La Demanderesse a maintenant développé un nouveau type de copolymère à blocs, particulièrement résistant à l'hydrolyse tout en étant parfaitement perméable au $CO_2$.

### DESCRIPTION DE MODES DE REALISATION DE L'INVENTION

Dans la présente description, on précise que lorsqu'il est fait référence à des intervalles, les expressions du type « allant de...à » ou « comportant/comprenant de... à » incluent les bornes de l'intervalle. A l'inverse, les expressions du type « compris entre... et... » excluent les bornes de l'intervalle.

Sauf mention contraire, les pourcentages exprimés sont des pourcentages massiques. Sauf mention contraire, les paramètres auxquels il est fait référence sont mesurés à pression atmosphérique, et température ambiante (20-25°C, généralement 23°C).

L'invention est maintenant décrite en détail et de façon non limitative dans la description qui suit.

L'invention a donc pour objet copolymère à blocs rigides polyamide et blocs souples, caractérisé en ce que le bloc souple comporte un ratio NH2/OH de concentrations de fins de chaine amine sur fins de chaine alcool, compris dans la gamme de 30 à 150, lesdites concentrations étant mesurées par RMN $^1$H (TFanh./$CD_2Cl_2$) ou (TFanh./$CD_2Cl_2{}^3$).

Avantageusement, ledit ratio NH2/OH est compris dans la gamme de 30 à 100, de préférence de 30 à 80, de préférence de 30 à 60.

Le copolymère à blocs rigides polyamide PA et blocs souples ainsi défini selon l'invention fait partie des polymères thermoplastiques élastomères. Le terme « polymère thermoplastique élastomère », abrégé « TPE », désigne un polymère qui constitue un matériau polyphasique présentant au moins deux transitions, à savoir une première transition à une température T1 (en général il s'agit de la température de transition vitreuse) et une deuxième transition à une température T2 supérieure à T1 (en général il s'agit du point de fusion). A une température inférieure à T1, le matériau

est rigide, entre T1 et T2 il a un comportement élastique, et au-dessus de T2 il est fondu. Un tel polymère combine le comportement élastique des matériaux de type caoutchouc avec l'aptitude à la transformation des thermoplastique.

Un élastomère thermoplastique sur base polyamide (TPE-A) au sens de l'invention, tel qu'un PEBA, est un copolymère à blocs comprenant un enchaînement de blocs, alternativement rigides ou durs (BD) et souples ou mous (BM), selon la formule générale suivante :

-[BD-BM]n-

et dans laquelle :

- BD ou Bloc Dur ou bloc rigide : représente un bloc comprenant du polyamide (homopolyamide ou copolyamide) ou un mélange de blocs comprenant du polyamide (homopolyamide ou copolyamide), ci-après abrégé indépendamment bloc PA ou BD ;
- BM ou Bloc Mou ou encore bloc souple : représente un bloc à base de polyéther (bloc PE), de polydiméthylsiloxane (bloc PDMS), de polyoléfine (bloc PO), et/ou de tout autre polymère de faible température de transition vitreuse, ou de leurs mélanges sous forme de copolymères alternés, statistiques ou à blocs. De préférence, BM est un bloc à base de polyéther en tout ou partie.

Avantageusement, ledit bloc souple comprend au moins un polyéther PE, de préférence choisi parmi PTMG, PPG, PO3G et/ou PEG, de préférence au moins un PPG.

- n représente le nombre d'unités de répétition du motif -BD-BM-dudit copolymère. n est compris dans la gamme allant de 1 à 60, de préférence de 5 à 30, ou mieux de 6 à 20.

Par faible température de transition vitreuse pour un polymère entrant dans la composition d'un BM au sens de l'invention, on entend une température de transition vitreuse Tg inférieure à 15°C, de préférence inférieure à 0°C, de préférence inférieure à -15°C, de préférence encore inférieure à -30°C. A titre d'exemple, ledit bloc rrou peut être à base de PEG de masse molaire en nombre égale à 1500g/mol et de Tg de l'ordre de - 35°C. Ladite température de transition vitreuse Tg peut également être inférieure à -50°C, notamment dans le cas où ledit bloc mou est à base de PTMG.

Les copolyéther bloc amides, encore appelés copolymères à blocs polyéther et blocs polyamide, soit en abrégé « PEBA », résultent de la polycondensation de blocs polyamides à extrémités réactives avec des blocs polyéthers à extrémités réactives, telles que, entre autres :

1) blocs polyamides à bouts de chaîne diamines avec des blocs polyoxyalkylènes à bouts de chaînes dicarboxyliques ;
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;
3) blocs polyamides à bouts de chaînes dicarboxyliques avec des polyétherdiols, les produits obtenus étant, dans ce cas particulier, des polyétheresteramides.

Dans le cas de la présente invention, on préfère les copolyéther bloc amides résultant majoritairement du type de polycondensation 2) ci-dessus, de sorte que le bloc souple comporte un ratio NH2/OH de concentrations de fins de chaine amine sur fins de chaine alcool, d'au moins 30, et de préférence compris dans la gamme de 30 à 150.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mol et de préférence entre 500 et 10000 g/mol.

La masse moléculaire (ou molaire) moyenne en nombre est fixée par la teneur en limiteur de chaine. Elle peut être calculée selon la relation :

$$Mn = (nmonomère / nlimiteur) * Mmotif\ de\ répétition + Mlimiteur$$

nmonomère = nombre de moles de monomère

nlimiteur = nombre de moles de diacide en excès
Mmotif de répétition = Masse molaire du motif de répétition
Mlimiteur = Masse molaire du diacide en excès

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Concernant le bloc rigide polyamide, la norme NF EN ISO 1874-1 : 2011 définit une nomenclature des polyamides. Le terme « monomère » dans la présente description doit être pris au sens d' « unité répétitive ». Le cas où une unité répétitive du polyamide est constituée de l'association d'un diacide avec une diamine est particulier. On considère que c'est l'association d'une diamine et d'un diacide, c'est-à-dire le couple « diaminediacide », dit aussi « XY », en quantité équimolaire qui correspond au monomère. Ceci s'explique par le fait qu'individuellement, le diacide ou la diamine n'est qu'une unité structurale, qui ne suffit pas à elle seule à polymériser.

On a par exemple des blocs PA412, PA414, PA418, PA610, PA612, PA614, PA618, PA912, PA1010, PA1012, PA1014 et PA1018.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha oméga amino carboxylique, on peut citer les acides aminocaproïque, amino-7-heptanoïque, amino-11- undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare les blocs polyamide PA par polycondensation :

- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y) ;
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha oméga amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque Pripol® par la société Unichema, ou sous la marque Empol® par la société Henkel) et les polyoxyalkylènes - $\alpha,\omega$ diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

Dans le cas où les blocs PA du PEBA selon l'invention comprennent au moins deux monomères différents, appelés «co-monomères», c'est à dire au moins un monomère et au moins un co-monomère (monomère différent du premier monomère), ils comprennent un copolymère tel qu'un copolyamide abrégé CoPA.

A titre d'exemples de blocs polyamides du troisième type, on peut citer les suivantes :

- 66/6 dans laquelle 66 désigne des motifs hexaméthylènediamine condensée avec l'acide adipique. 6 désigne des motifs résultant de la condensation du caprolactame.
- 66/610/11/12 dans laquelle 66 désigne l'hexaméthylènediamine condensée avec l'acide adipique. 610 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

La masse molaire Mn des blocs souples est comprise entre 100 et 6 000 g/mol et de préférence entre 200 et 3 000 g/mol.

De préférence, le polymère comprend de 1 à 80 % en masse de blocs souples et de 20 à 99 % en masse de blocs polyamide, de préférence de 4 à 80 % en masse de blocs souples et 20 à 96 % en masse de blocs polyamide. Selon un mode de réalisation préféré, le bloc rigide polyamide, dans le copolymère à blocs rigides PA et blocs souples selon l'invention, comprend au moins un des motifs de polyamide suivants : 11, 12, 6, 610, 612, 1010, 1012, et leurs mélanges ou copolyamides.

Les blocs polyéthers PE sont majoritairement (c'est-à-dire à plus de 50% en poids sur le poids des blocs polyéthers) des blocs polyoxyalkylènes à bouts de chaînes diamines, obtenus par cyanoéthylation et hydrogénation de blocs polyoxyalkylène alpha-oméga dihydroxylés aliphatiques appelées polyétherdiols et constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est-à-dire ceux constitués de motifs polytriméthylène ether de glycol (de tels copolymères avec des blocs polytriméthylene ether sont décrits dans le document US6590065), et des blocs PTMG c'est à dire ceux constitués de motifs tetraméthylène glycols appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphenols, tels que par exemple le bisphenol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule :

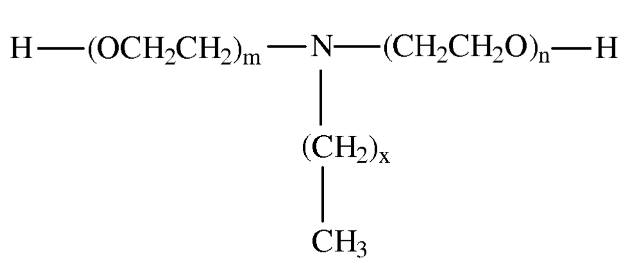

dans laquelle m et n sont compris entre 1 et 20 et x entre 8 et 18. Ces produits sont disponibles dans le commerce sous la marque Noramox® de la société CECA et sous la marque Genamin® de la société Clariant.

Les blocs souples polyéthers comprenant des blocs polyoxyalkylène à bouts de chaînes $NH_2$, peuvent être obtenus par cyanoacétylation de blocs polyoxyalkylène alpha-oméga dihydroxylés aliphatiques appelées polyétherdiols. On peut également utiliser les blocs polyoxyalkylène à bouts de chaînes $NH_2$, commercialisés sous le terme Jeffamine® (Par exemple Jeffamine® D400, D2000, ED 2003, XTJ 542, produits commerciaux de la société Huntsman, également

décrites dans les documents de brevets JP2004346274, JP2004352794 et EP1482011). D'autres polyéthers diamines sont commercialisés sous les noms Baxxodur® de BASF, et Elastamine® de Huntsman.

Les blocs polyétherdiols, qu'ils soient utilisés tels quels et copolycondensés avec des blocs polyamides à extrémités carboxyliques, ou bien aminés pour être transformés en polyéther diamines et condensés avec des blocs polyamides à extrémités carboxyliques, la méthode générale de préparation en deux étapes des copolymères PEBA est sensiblement la même, et forme des liaisons respectivement ester et amide entre les blocs PA et les blocs PE. Cette méthode est connue et décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux Pebax® commercialisés par Arkema, aux Vestamid® commercialisés par Evonik®, aux Grilamid® commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 612, en PA 66/6, en PA 1010 et/ou en PA 614, de préférence des blocs PA 11 et/ou PA 12 ; et des blocs PE en PTMG, en PPG, PEG et/ou en PO3G. Les PEBA à base de blocs PE constitués majoritairement de PEG sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du $^{14}C$. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de $^{12}C/^{14}C$ d'au moins 1,2 x $10^{-14}$. De préférence, les PEBA selon l'invention comprennent au moins 50% en masse de carbone bio-ressourcé sur la masse totale de carbone, ce qui correspond à un ratio isotopique $^{12}C/^{14}C$ d'au moins 0,6.$10^{-12}$. Cette teneur est avantageusement plus élevée, notamment jusqu'à 100%, qui correspond à un ratio isotopique $^{12}C/^{14}C$ de $1,2 \times 10^{-12}$, dans le cas par exemple de PEBA à blocs PA 11 et blocs PE comprenant du PO3G, PTMG et/ou PPG issus de matières premières d'origine renouvelable.

Par bloc polysiloxane (ci-après abrégé PSi) au sens de l'invention, on entend tout polymère ou oligomère organisilicié à structure linéaire ou cyclique, ramifiée ou réticulée obtenu par polymérisation de silanes fonctionnalisés et constitué pour l'essentiel par une répétition de motifs principaux dans lesquels des atomes de silicium sont reliés entre eux par des atomes d'oxygène (liaison siloxane Si-O-Si), des radicaux hydrocarbonés éventuellement substitués étant directement liés par l'intermédiaire d'un atome de carbone sur lesdits atomes de silicium. Les radicaux hydrocarbonés les plus courants sont les radicaux alkyls notamment en C1-C10 et en particulier méthyle, les radicaux fluoroalkyls, les radicaux aryls et en particulier phényle, et les radicaux alcényls et en particulier vinyle ; d'autres types de radicaux susceptibles d'être lies soit directement, soit par l'intermédiaire d'un radical hydrocarboné, à la chaîne siloxanique sont notamment l'hydrogène, les halogènes et en particulier le chlore, le brome ou le fluor, les thiols, les radicaux alcoxy, les radicaux polyoxyalkylènes (ou polyéthers) et en particulier polyoxyéthylène et/ou polyoxypropylène, les radicaux hydroxyls ou hydroxyalkyls, les groupements amines substitués ou non, les groupements amides, les radicaux acyloxy ou acyloxyalkyls, les radicaux hydroxyalkylamino ou aminoalkyls, des groupements ammonium quaternaires, des groupements amphotères ou betaïniques, des groupements anioniques tels que carboxylates, thioglycolates, sulfosuccinates, thiosulfates, phosphates et sulfates, et leurs mélanges, cette liste n'étant bien entendu nullement limitative (silicones dites "organomodifiees").

De préférence, lesdits blocs polysiloxane comprennent du polydiméthylsiloxane (ci-après abrégé blocs PDMS), du polyméthylphénylsiloxane, et/ou du polyvinylsiloxane.

Par bloc polyoléfine (ci-après abrégé bloc PO) au sens de l'invention, on entend tout polymère comprenant comme monomère une alpha-oléfine, c'est-à-dire les homopolymères d'une oléfine ou les copolymères d'au moins une alpha-oléfine et d'au moins un autre monomère copolymérisable, l'alpha-oléfine ayant avantageusement de 2 à 30 atomes de carbone.

A titre d'exemple d'alpha-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou plus de deux.

A titre d'exemples, on peut citer :

- les homopolymères et copolymères de l'éthylène, en particulier le polyéthylène basse densité (LDPE), le polyéthylène haute densité (HDPE), le polyéthylène linéaire basse densité (LLDPE), le polyéthylène très basse densité (VLDPE), le polyéthylène obtenu par catalyse métallocène ;
- les homopolymères et copolymères du propylène,
- les polyalphaoléfines essentiellement amorphes ou attactiques (APAO),
- les copolymères éthylène/alpha-oléfine tels qu'éthylène/propylène, les élastomères EPR (éthylène-propylène-rubber), et EPDM (éthylène- propylène-diène), et les mélanges de polyéthylène avec un EPR ou un EPDM,
- les copolymères blocs styrène/éthylène-butène/styrène (SEBS), styrène/ butadiène/styrène (SBS), styrène/isoprène/styrène (SIS), et styrène/éthylène-propylène/styrène (SEPS),
- les copolymères de l'éthylène avec au moins un produit choisi parmi les sels ou les esters d'acides carboxyliques insaturés tels que par exemple les (méth)acrylates d'alkyle, l'alkyle pouvant avoir jusqu'à 24 atomes de carbone, les esters vinyliques d'acides carboxyliques saturés tels que par exemple l'acétate ou le propionate de vinyle, et les diènes tels que par exemple le 1,4-hexadiène ou le polybutadiène.

Selon un mode de réalisation avantageux de l'invention ledit au moins un bloc polyoléfine comprend du polyisobutylène et/ou du polybutadiène.

Selon encore un autre mode de réalisation, ledit au moins un bloc polyoléfine est fabriqué à partir des diol(s) à terminaison hydroxyle de bas poids moléculaire à base d'homopolymères de butadiène. Des résines de polybutadiène à terminaison hydroxyle (HTPB), sont notamment commercialisées sous le nom Krasol®, et sont caractérisées par une excellente hydrophobicité et une fonctionnalité hautement réactive.

Selon un mode de réalisation particulièrement avantageux, le copolymère à blocs selon l'invention comporte au moins un bloc souple polyoléfine (bloc PO) et au moins un bloc dur hydrophile (ci-après abrégé BDh) comprenant à la fois du polyamide et du polyéther, tel qu'un bloc polyétheramide, et/ou un bloc polyétheramideimide, etc... Ledit bloc PO comprend de préférence une polyoléfine comportant des groupements terminaux acides, ou mieux amines. De préférence, le bloc PO est obtenu par dégradation thermique de polyoléfines de haut poids moléculaire pour former des polyoléfines de plus faible masse et fonctionnalisées (méthode de référence : Japanese Kokai Publication Hei-03-62804). En ce qui concerne le bloc BDh, il peut comprendre en outre au moins un polymère choisi parmi: des polymères cationiques, de type amine quaternaire et/ou dérivés phosphorés ; et/ou des polymères anioniques, de type diacide modifié, comportant un groupement sulfonate et susceptible de réagir avec un polyol. L'ajout de sel organique est alors envisageable dans la préparation du bloc BDh ou lors de la réaction entre le bloc PO et le bloc BDh. Le document US6552131 décrit la synthèse et les différentes structures possibles pour le copolymère à blocs PO et à blocs BDh, celles-ci étant bien entendu envisageables dans le procédé selon l'invention.

Si les copolymères à blocs décrits ci-dessus comprennent généralement au moins un bloc rigide polyamide et au moins un bloc souple, il est évident que la présente invention couvre en fait tous les copolymères comprenant deux, trois, quatre (voire plus) blocs différents choisis parmi ceux décrits dans la présente description, dès l'instant qu'au moins un de ces blocs est un bloc polyamide.

Avantageusement, le ratio en poids des blocs PA sur les blocs souples est compris dans la gamme de 1 à 10, de préférence de 1,5 à 6, de préférence de 1,7 à 5.

La présente invention a également pour objet l'utilisation d'un bloc souple pour fabriquer un copolymère à blocs polyamides et blocs souples à la fois résistant à l'hydrolyse et perméable au $CO_2$, de perméabilité au $CO_2$ d'au moins 10000 cm3/m2/24h/atm pour un film de 25 $\mu$m dudit copolymère, caractérisée en ce que ledit bloc souple comporte un ratio de fins de chaine amine sur fins de chaine acide ou alcool compris dans la gamme de 30 à 150.

La présente invention a aussi pour objet une composition à base de copolymère selon l'invention, caractérisée en ce qu'elle comprend :

- de 51% à 99,9% en poids dudit copolymère,
- de 0,1 à 49% en poids d'au moins un autre composant choisi parmi les polyamides, les polyoléfines fonctionnelles, les copolymères d'éthylène et acétate de vinyle, les copolymères d'éthylène et d'acrylate, et les copolymères d'éthylène et d'alkyl(méth)acrylate,
  et/ou
- de 0,1 à 10% en poids d'additifs choisis parmi les agents nucléants, les charges, notamment les charges minérales, telles que le talc, les fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges,

sur le poids total de la composition.

La présente invention a aussi pour objet un article façonné, tel que fibre, tissu, film, feuille, jonc, tube, pièce injectée et/ou extrudée, comprenant un copolymère ou une composition selon l'invention.

De préférence, cet article constitue au moins une partie d'un des articles suivants : article de sport, élément de chaussure, élément de chaussure de sport, semelle de chaussure, notamment crampon, élément de ski, notamment de chaussure de ski ou de coque de ski, ustensile de sport tel que patins à glace, fixations de skis, raquettes, battes de sports, planches, fers à cheval, guêtre de protection, palmes, balles de golf, article de loisirs, de bricolage, outil ou équipement de voirie, équipement ou article de protection, tel que visières de casques, lunettes, branches de lunettes, pièce automobile, élément de voiture tel que tableau de bord, airbag, protège-phares, rétroviseur, petite pièce de voitures tout terrain, réservoir, en particulier de scooter, cyclomoteur, motos, pièce industrielle, additif industriel, pièce électrique, électronique, informatique, tablette, téléphone, ordinateur, accessoire de sécurité, enseigne, bandeau lumineux, panneau signalétique et publicitaire, présentoir, gravure, ameublement, agencement de magasin, décoration, balle de contact, dispositif médical, prothèse dentaire, implant, article d'ophtalmologie, membrane pour hémodialyseur, fibres optique, objet d'art, sculpture, lentilles d'appareils photo, lentilles d'appareil photo jetable, support d'impression, notamment support d'impression directe avec encres UV, pour tableau photo, vitre, toit panoramique, courroie de transmission, notamment dans l'industrie automobile, dans l'industrie du bois, ou l'industrie textile, additif antistatique, produit ou film imper-respirant, support de molécules actives, agent colorant, agent de soudure, élément de décoration, et/ou additif pour polyamide, semelle pour rail, pièce pour poussette, roue, poignée, élément de siège, pièce de siège-auto pour enfant, pièce de construction, pièce d'équipement audio, d'isolation acoustique et/ou thermique, pièce visant à amortir des chocs et/ou des vibrations, tels que ceux générés par un moyen de transport, des roues, à roulement doux comme un pneu, textile, tissé ou non tissé, emballage, courroie péristaltique, bande de courroie transporteuse, peau et/ou cuir synthétique, élément de flexible, notamment de gaine flexible, dans l'industrie pétrolière et gazière, en particulier dans les applications offshore, toutes applications nécessitant à la fois un matériau résistant à l'hydrolyse et perméable au $CO_2$, et tout article comprenant un mélange de ces articles.

EXEMPLES

Les exemples suivants illustrent l'invention sans la limiter. Les normes utilisées dans les exemples correspondent également à celles utilisées plus généralement pour caractériser l'invention dans la description ou les revendications.

Matériaux utilisés :

*Tableau 1 : Nature des blocs souples utilisés et leur ratio de fins de chaine NH2/OH*

| **Nom** | **Nature du bloc souple** | **Mn (g/mol)** | **Concentration en fins de chaine** | | |
|---|---|---|---|---|---|
| | | | RMN 1H (TFanh./CD2Cl$_2$$^3$) | | |
| | | potentiométrie | **NH2 (meq/g)** | **OH (meq/g)** | **Ratio NH2/OH** |
| PEcp1 | PPG | 2086 | 0,929 | 0,079 | 11,76 |
| PEex1 | PPG | 467 | 4,58 | 0,13 | 35,23 |
| PEcp2 | PPG | 2172 | 0,86 | 0,08 | 10,75 |
| PEex2 | PPG/PTMG/PPG | 1090 | 1,87 | 0,05 | 37,40 |

Dans le Tableau 2 ci-dessous, seul le PEBA6 est à base de PE (PTMG) à fins de chaines purement alcool (PEdiOH). Les autres PEBAs sont à base de PE à fins de chaine majoritairement amine, et contiennent une faible concentration en fins de chaine alcool : leur ratio NH2/OH correspondant est indiqué dans le tableau 1 ci-dessus.

*Tableau 2 : Nature des PEBAs comparés dans les tests*

| Essai | Nature PA | Nature PE | Mn PA g/mol | Mn PE g/mol | PA/PE |
|---|---|---|---|---|---|
| PEBA1 cp1 | 12 | PPG | 4500 | 2086 | 2,15 |
| PEBA2 ex2 | 12 | PPG/PTMG/PPG | 3883 | 1090 | 3,56 |
| PEBA3 ex1 | 12 | PPG | 800 | 467 | 1,71 |

(suite)

| Essai | Nature PA | Nature PE | Mn PA g/mol | Mn PE g/mol | PA/PE |
|---|---|---|---|---|---|
| PEBA4 ex2 | 12 | PPG/PTMG/PPG | 2000 | 1090 | 1,83 |
| PEBA5 ex1 | 12 | PPG | 800 | 467 | 1,7 |
| PEBA6 cp3 | 12 | PTMG (diOH) | 2000 | 1000 | 2 |
| PEBA7 ex1 | 11 | PPG | 1720 | 430 | 4 |

Tests de résistance à l'hydrolyse

Les granulés de PEBA sont contenus dans une cage en métal qui est déposée au fond de l'autoclave. L'autoclave est ensuite rempli avec 1.4L d'eau à pH 7, fermé et soumis à un inertage sous balayage d'azote pendant 3h. L'autoclave est ensuite placé dans une étuve chauffée à 110°C. L'hydrolyse est rapide, les essais ont une durée de 25 à 30 jours.

Dans les exemples comme dans la description de la présente invention,

- la viscosité inhérente est déterminée selon la norme ISO 307:2007 dans le m-crésol à une température de 20°C.
- la contrainte en traction à 23°C et l'allongement à la rupture sont déterminés selon la norme ISO 527 1A:2012.
- la perméation ou perméabilité au $CO_2$ est mesurée selon le mode opératoire décrit ci-après.

Evolution de la viscosité inhérente au cours de l'hydrolyse :

Dans le tableau 3 suivant, les résultats d'hydrolyse du PEBA6 cp3 base PTMGdiOH sont comparés à ceux des PEBAs synthétisés à partir de blocs souples à fins de chaines majoritairement NH2. Un PA 11 industriel est ajouté comme référence et permet de comparer la résistance à l'hydrolyse des PEBA avec celle d'un PA.

*Tableau 3 : Viscosité inhérente des échantillons au cours de l'hydrolyse*

| **Echantillons** | **Viscosité inhérente** | | **Pourcentage de perte (%)** |
|---|---|---|---|
| | **Initiale** | **En fin d'hydrolyse** | |
| PA11 | 1,4 | 1,23 | 12 |
| PEBA6 cp3 | 1,34 | 0,33 | 75 |
| PEBA1 cp1 | 1,06 | 0,72 | 32 |
| PEBA4 ex2 | 1,42 | 1,3 | 8 |
| PEBA5 ex1 | 1,25 | 0,94 | 25 |

Le PEBA6 cp3 a une faible tenue à l'hydrolyse comparée à celle du PA 11. Le PEBA6 cp3 atteint une viscosité de 0,3 à la fin de l'hydrolyse avec un pourcentage de perte en viscosité de 75%. La viscosité du PA11 reste stable durant l'hydrolyse et son pourcentage de perte en viscosité est seulement de 12%.

Les trois PEBAs synthétisés à partir de polyéther à fins de chaines majoritairement diamine sont plus résistants à l'hydrolyse que le PEBA6 cp3 Le PEBA4 ex2 présente une résistance à l'hydrolyse supérieure à celle du PA11. La viscosité de PEBA5 ex1 diminue légèrement, celle du PEBA1 cp1 diminue un peu plus au début de l'hydrolyse.

L'utilisation de blocs souples de Ratio NH2/OH supérieur à 30 dans le copolymère à blocs améliore nettement la tenue à l'hydrolyse du copolymère.

Tests mécaniques au cours de l'hydrolyse :

Des haltères des différents produits sont soumis au vieillissement dans l'eau. L'hydrolyse est réalisée en autoclave fermé à 110°C. Des prélèvements sont effectués et les haltères hydrolysés sont soumis à des tractions afin d'étudier l'allongement à la rupture après hydrolyse.

Afin de faire la caractérisation mécanique des haltères, avant et après hydrolyse, dans les mêmes conditions,

il est nécessaire que les haltères à T0 soient saturés en eau. Les haltères sont donc plongés dans l'eau pendant 119h à température ambiante.

Après la saturation en eau des haltères, elles sont séchées sommairement avec du papier absorbant, puis sont soumises aux tractions.

Les résultats de contrainte à la rupture (σRupt), d'allongement à la rupture (εRup) et de viscosité inhérente (Visco Inh.), en fonction du temps d'hydrolyse sont indiqués dans le tableau 4 suivant.

*Tableau 4 : Résultats des tractions au cours de l'hydrolyse*

| | | PEBA6 cp3 | | | PEBA4 ex2 | | | PEBA5 ex1 | | |
|---|---|---|---|---|---|---|---|---|---|---|
| **Prélèvement** | **Temps Hydrolyse (heures)** | **σRupt moy (Mpa)** | **εRup moy (%)** | **Visco Inh.** | **σRupt moy (Mpa)** | **εRup moy (%)** | **Visco Inh.** | **σRupt moy (Mpa)** | **εRup moy (%)** | **Visco Inh.** |
| T0 | 0 | 38,2 | 470 | 1,34 | 38,9 | 381,57 | 1,67 | 28,00 | 426,64 | 0,95 |
| P1 | 91 | 39,6 | 375 | 0,87 | 24,4 | 406,7 | 1,44 | 27,58 | 359,8 | 0,87 |
| P2 | 182 | 11,56 | 14 | 0,62 | 39,6 | 383,5 | 1,44 | 28,2 | 380,1 | 0,85 |
| P3 | 417 | - | - | 0,33 | 40,0 | 389,8 | 1,4 | 27,8 | 363,1 | 0,86 |
| P4 | 483 | - | - | 0,33 | 41,3 | 377,6 | 1,39 | 29,9 | 366,4 | 0,86 |
| P5 | 678 | - | - | 0,29 | 38,2 | 389,5 | 1,34 | 27,3 | 364,5 | 0,84 |

Le graphe de la figure 1 montre l'évolution de l'allongement à la rupture de ces différents PEBA en fonction du temps d'hydrolyse.

Le PEBA6 cp3 se dégrade rapidement. Au bout de 182 h d'hydrolyse l'allongement à la rupture est de 14%. Après environ 400h d'hydrolyse, il est impossible d'effectuer des tractions sur les haltères de PEBA6 cp3 qui se disloquent.

Au contraire, les allongements à la rupture des deux PEBA selon l'invention PEBA4 ex2 et PEBA5 ex1 se stabilisent après hydrolyse. Ainsi le PEBA4 ex2 a un allongement à la rupture d'environ 380% pour une contrainte de 40 MPa avant et après hydrolyse. Le PEBA5 ex1 a quant à lui un allongement à la rupture de 420% pour une contrainte de 28 MPa avant hydrolyse puis l'allongement à la rupture se stabilise à 360% pour une contrainte d'environ 28 MPa après hydrolyse.

Tests de perméabilité (ou perméation) au $CO_2$

Mode opératoire pour la mesure de perméation aux gaz :
***La perméabilité*** d'un matériau se définit par le flux traversant une membrane d'épaisseur « e » avec la relation :

$$\frac{Quantité.e}{Surface.durée.(p_2 - p_1)}$$

où $p_2$ et $p_1$ sont les pressions partielles de part et d'autre de la membrane. On mesure le ***coefficient de perméabilité (flux)*** **:**

$$\frac{Quantité}{Surface.durée}$$

Principe :

Il consiste à balayer la face supérieure du film par le gaz d'essai et à mesurer par chromatographie en phase gazeuse le flux qui diffuse à travers le film dans la partie inférieure, balayée par le gaz vecteur : l'Hélium.

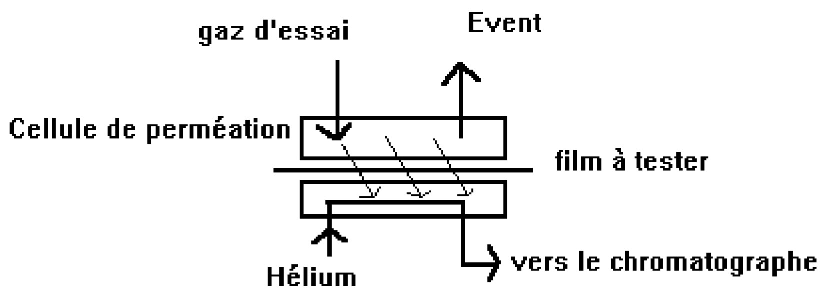


Tous les PEBA testés ci-dessus, dont le bloc souple présente un ratio NH2/OH de concentrations de fins de chaine amine sur fins de chaine alcool, compris dans la gamme de 30 à 150, selon l'invention présentent une perméabilité au $CO_2$ d'au moins 10000 cm3/m2/24h/atm pour un film de 25 µm dudit copolymère.

Il s'avère que les PEBA dont le bloc souple présente un ratio NH2/OH inférieur à 30 ont, au contraire, une perméabilité inférieure à 10000 cm3/m2/24h/atm pour un film de 25 µm dudit copolymère.

En définitive, la présente invention fournit un copolymère à blocs facilement extrudable même en tuyaux de gros diamètres, présentant un allongement à la rupture supérieur à 350% selon la norme ISO 527 1A:2012, et une viscosité inhérente stable, qui ne diminue pas de plus de 25% même lorsque ledit copolymère est soumis à des conditions extrêmes d'hydrolyse, par exemple dans l'eau de mer, ou en climat tropical ou très humide.

## Revendications

1. Copolymère à blocs rigides polyamide et blocs souples, **caractérisé en ce que** les blocs souples comportent un ratio NH2/OH de concentrations de fins de chaine amine surfins de chaine alcool, compris dans la gamme de 30 à

150, lesdites concentrations étant mesurées par RMN $^1H$ ($TF_{anh.}/CD_2Cl_2$).

2. Copolymère selon la revendication 1, dans lequel ledit ratio NH2/OH est compris dans la gamme de 30 à 100, de préférence de 30 à 80, de préférence de 30 à 60.

3. Copolymère selon l'une quelconque des revendications 1 ou 2, dans lequel lesdits blocs souples comprennent au moins un bloc choisi parmi : polyéther, polydiméthylsiloxane, polyoléfine, et leurs mélanges ou copolymères.

4. Copolymère selon l'une quelconque des revendications 1 à 3, dans lequel lesdits blocs souples comprennent au moins un polyéther PE, de préférence choisi parmi PTMG, PPG, PO3G et/ou PEG, de préférence au moins un PPG.

5. Copolymère selon l'une quelconque des revendications 1 à 4 dans lequel lesdits blocs polyamide PA comprennent au moins un des motifs de polyamide suivants : 11, 12, 6, 610, 612, 1010, 1012, et leurs mélanges ou copolyamides.

6. Copolymère selon l'une quelconque des revendications 1 à 5 dans lequel le ratio en poids des blocs PA sur les blocs souples est compris dans la gamme de 1 à 10, de préférence de 1,5 à 6, de préférence de 1,7 à 5.

7. Utilisation d'un bloc souple pour fabriquer un copolymère à blocs polyamides et blocs souples à la fois résistant à l'hydrolyse et perméable au $CO_2$, de perméabilité au $CO_2$ d'au moins 10000 cm3/m2/24h/atm pour un film de 25 $\mu$m dudit copolymère, où la perméabilité et la résistance à l'hydrolyse sont mesurées par les méthodes décrites dans la description, **caractérisée en ce que** ledit bloc souple comporte un ratio de concentrations de fins de chaine amine sur fins de chaine alcool compris dans la gamme de 30 à 150, lesdites concentrations étant mesurées par RMN$^1H$ (TFanh./CD2Cl2)

8. Article façonné, tel que fibre, tissu, film, feuille, jonc, tube, pièce injectée et/ou extrudée, comprenant un copolymère tel que défini à l'une quelconque des revendications 1 à 6.

9. Articlé façonné selon la revendication 8, **caractérisé en ce qu'**il constitue au moins une partie d'un des articles suivants : article de sport, élément de chaussure, élément de chaussure de sport, semelle de chaussure, notamment crampon, élément de ski, notamment de chaussure de ski ou de coque de ski, ustensile de sport tel que patins à glace, fixations de skis, raquettes, battes de sports, planches, fers à cheval, guêtre de protection, palmes, balles de golf, article de loisirs, de bricolage, outil ou équipement de voirie, équipement ou article de protection, tel que visières de casques, lunettes, branches de lunettes, pièce automobile, élément de voiture tel que tableau de bord, airbag, protège-phares, rétroviseur, petite pièce de voitures tout terrain, réservoir, en particulier de scooter, cyclomoteur, motos, pièce industrielle, additif industriel, pièce électrique, électronique, informatique, tablette, téléphone, ordinateur, accessoire de sécurité, enseigne, bandeau lumineux, panneau signalétique et publicitaire, présentoir, gravure, ameublement, agencement de magasin, décoration, balle de contact, dispositif médical, prothèse dentaire, implant, article d'ophtalmologie, membrane pour hémodialyseur, fibres optique, objet d'art, sculpture, lentilles d'appareils photo, lentilles d'appareil photo jetable, support d'impression, notamment support d'impression directe avec encres UV, pour tableau photo, vitre, toit panoramique, courroie de transmission, notamment dans l'industrie automobile, dans l'industrie du bois, ou l'industrie textile, additif antistatique, produit ou film imper-respirant, support de molécules actives, agent colorant, agent de soudure, élément de décoration, et/ou additif pour polyamide, semelle pour rail, pièce pour poussette, roue, poignée, élément de siège, pièce de siège-auto pour enfant, pièce de construction, pièce d'équipement audio, d'isolation acoustique et/ou thermique, pièce visant à amortir des chocs et/ou des vibrations, tels que ceux générés par un moyen de transport, des roues, à roulement doux comme un pneu, textile, tissé ou non tissé, emballage, courroie péristaltique, bande de courroie transporteuse, peau et/ou cuir synthétique, élément de flexible, notamment de gaine flexible, dans l'industrie pétrolière et gazière, en particulier dans les applications offshore, toutes applications nécessitant à la fois un matériau résistant à l'hydrolyse et perméable au $CO_2$, et tout article comprenant un mélange de ces articles.

## Patentansprüche

1. Copolymer aus steifen Polyamidblöcken und nachgiebigen Blöcken, **dadurch gekennzeichnet, dass** die nachgiebigen Blöcke ein NH2/OH-Verhältnis von Aminkettenenden- zu Alkoholkettenenden-Konzentrationen aufweisen, das im Bereich von 30 zu 150 liegt, wobei die Konzentrationen mittels 1H-NMR ($TF_{anh.}/CD_2Cl_2$) gemessen werden.

2. Copolymer nach Anspruch 1, wobei das NH2/OH-Verhältnis im Bereich von 30 bis 100, vorzugsweise von 30 bis

80, bevorzugt von 30 bis 60 liegt.

3. Copolymer nach einem beliebigen der Ansprüche 1 oder 2, wobei die nachgiebigen Blöcke mindestens einen Block umfassen, der aus den folgenden ausgewählt ist: Polyether, Polydimethylsiloxan, Polyolefin sowie deren Mischungen oder Copolymeren.

4. Copolymer nach einem beliebigen der Ansprüche 1 bis 3, wobei die nachgiebigen Blöcke mindestens einen PE-Polyether, der vorzugsweise aus PTMG, PPG, P03G und/oder PEG ausgewählt ist, bevorzugt mindestens ein PPG umfasst.

5. Copolymer nach einem beliebigen der Ansprüche 1 bis 2, wobei die Polyamidblöcke PA mindestens einen der folgenden Polyamidbausteine umfassen: 11, 12, 6, 610, 612, 1010, 1012 sowie deren Mischungen oder Copolyamide.

6. Copolymer nach einem beliebigen der Ansprüche 1 bis 5, wobei das Gewichtsverhältnis der PA-Blöcke zu den nachgiebigen Blöcken im Bereich von 1 bis 10, vorzugsweise von 1,5 bis 6, bevorzugt von 1,7 bis 5 liegt.

7. Verwendung eines nachgiebigen Blocks, um ein Copolymer aus Polyamidblöcken und nachgiebigen Blöcken herzustellen, das sowohl hydrolysebeständig als auch CO2-durchlässig ist, wobei die CO2-Durchlässigkeit für eine 25-μm-Folie des Copolymers mindestens 10000 cm3/m2/24Std./atm beträgt, wobei Durchlässigkeit und Hydrolysebeständigkeit mittels der Methoden gemessen werden, wie sie in der Beschreibung dargelegt sind, **dadurch gekennzeichnet, dass** der nachgiebige Block ein Verhältnis von Aminkettenenden- zu Alkoholkettenenden-Konzentrationen aufweist, das im Bereich von 30 bis 150 liegt, wobei die Konzentrationen mittels $^1$H-NMR (TFanh./CD2C12) gemessen werden.

8. Geformter Gegenstand, wie etwa ein(e) Faser, Gewebe Folie, Blatt, Stange, Rohr, Spritzguss- und/oder Extrusionsteil, wobei er ein Copolymer gemäß der Begriffsbestimmung in einem beliebigen der Ansprüche 1 bis 6 umfasst.

9. Geformter Gegenstand nach Anspruch 8, **dadurch gekennzeichnet, dass** er mindestens einen Abschnitt eines der folgenden Gegenstände darstellt: Sportartikel, Schuhelement, Sportschuhelement, Schuhsohle, insbesondere Stollen, Skielement, insbesondere Skischuh oder Skischale, Sportgerät wie etwa Schlittschuhe, Skibindungen, Ballschläger, Sportschlaggeräte, Bretter, Hufeisen, Schutzgamaschen, Schwimmflossen, Golfbälle, Freizeitartikel, Heimwerkerartikel, Straßenbauwerkzeug oder -ausrüstung, Schutzausrüstung oder -artikel, wie etwa Helmvisiere, Brillen, Brillenbügel, Automobilteil, Wagenelement, wie etwa Armaturenbrett, Airbag, Scheinwerfergehäuse, Rückspiegel, kleines Geländefahrzeugteil, Tank, insbesondere von Motorrollern, Mopeds, Motorrädern, Industrieteil, Industriezusatzstoff, elektrisches, elektronisches, informationstechnisches Teil, Tablet, Telefon, Computer, Sicherheitszubehör, Firmenschild, Leuchtstreifen, Hinweis- und Werbetafel, Warenschaukasten, Druckbild, Einrichtungsgegenstand, Geschäftslokalausstattung, Dekoration, Jonglierball, Medizingerät, Zahnprothese, Implantat, augenmedizinischer Gegenstand, Dialysemembran, Glasfaser, Kunstgegenstand, Skulptur, Linsen für Fotoapparate, Linsen für Einmal-Fotoapparate, Druckunterlage, insbesondere Direktdruckunterlage für UV-Druckfarben, für Fotoplatten, Fensterscheibe, Panoramadach, Übertragungsriemen, insbesondere im Automobilsektor, in der holzverarbeitenden Industrie oder der Textilindustrie, Antistatikzusatz, Produkt oder Folie wasserdichter/atmungsaktiver Art, Wirkstoffträger, Farbstoff, Schweißmittel, Zierelement, und/oder Zusatzstoff für Polyamid, Schienenunterlage, Kinderwagenteil, Rad, Handgriff, Sitzteil, Teil für Autokindersitze, Bauteil, Teil für Audiogeräte, für Schall- und/oder Wärmedämmung, Teil zum Dämpfen von Stößen und/oder Schwingungen, wie etwa solchen, die von einem Transportmittel, von Rädern mit weichem Rollverhalten, wie einem Luftreifen, verursacht werden, Textilstoff, gewebter oder vliesartiger Beschaffenheit, Verpackung, Peristaltikriemen, Förderriemenband, Haut und/oder Leder synthetischer Art, Schlauchelement, insbesondere einer Schlauchumhüllung, in der Erdöl- und Erdgasindustrie, insbesondere in Offshore-Anwendungen, jedwede Anwendungen, welche ein sowohl hydrolysebeständiges als auch CO2-durchlässiges Material erfordern, und jedweder Gegenstand, der eine Mischung dieser Gegenstände umfasst.

## Claims

1. Copolymer containing rigid polyamide blocks and flexible blocks, **characterized in that** the flexible blocks have an $NH_2$/OH ratio of concentrations of amine chain ends to alcohol chain ends that is within the range from 30 to 150, said concentrations being measured by $^1$H NMR ($TF_{anh.}/CD_2Cl_2$).

2. Copolymer according to Claim 1, wherein said $NH_2/OH$ ratio is within the range from 30 to 100, preferably from 30 to 80, preferably from 30 to 60.

3. Copolymer according to either one of Claims 1 or 2, wherein said flexible blocks comprise at least one block selected from: polyether, polydimethylsiloxane, polyolefin, and mixtures or copolymers thereof.

4. Copolymer according to any one of Claims 1 to 3, wherein said flexible blocks comprise at least one polyether PE, preferably selected from PTMG, PPG, PO3G and/or PEG, preferably at least one PPG.

5. Copolymer according to any one of Claims 1 to 4, wherein said polyamide PA blocks comprise at least one of the following polyamide units: 11, 12, 6, 610, 612, 1010, 1012, and mixtures or copolyamides thereof.

6. Copolymer according to any one of Claims 1 to 5, wherein the weight ratio of the PA blocks to the flexible blocks is within the range from 1 to 10, preferably from 1.5 to 6, preferably from 1.7 to 5.

7. Use of a flexible block for manufacturing a copolymer containing polyamide blocks and flexible blocks that is both hydrolysis-resistant and $CO_2$-permeable, with a permeability to $CO_2$ of at least 10 000 $cm^3/m^2/24$ h/atm for a 25 $\mu$m film of said copolymer, where the permeability and the hydrolysis resistance are measured by the methods described in the description, **characterized in that** said flexible block has a ratio of concentrations of amine chain ends to alcohol chain ends that is within the range from 30 to 150, said concentrations being measured by $^1H$ NMR ($TF_{anh.}/CD_2Cl_2$).

8. Fashioned article such as a fibre, fabric, film, sheet, rod, tube or injection-moulded and/or extruded part, comprising a copolymer as defined according to any one of claims 1 to 6.

9. Fashioned article according to Claim 8, **characterized in that** it constitutes at least a part of one of the following articles: sports article, shoe component, sports shoe component, shoe sole, especially studs, ski component, especially ski boot or ski boot shell, sports tool such as ice skates, ski attachments, rackets, sports bats, boards, horseshoes, gaiters, flippers, golf balls, leisure articles, DIY articles, road maintenance tool or equipment, protective equipment or article, such as helmet visors, goggles, goggle arms, motor vehicle part, car component such as dashboard, airbag, headlamp protector, rearview mirror, small part for off-road vehicles, tank, in particular for scooters, mopeds or motorbikes, industrial component, industrial additive, electrical, electronic, information technology, tablet computer, telephone or computer component, safety accessory, shop sign, lighting strip, information and publicity panel, presentation case, engraving, furnishing, shopfitting, decoration, contact ball, medical device, dental prosthesis, implant, ophthalmology article, haemodialysis machine membrane, optical fibres, art object, sculpture, photography camera lens, disposable photography camera lens, printing support, especially support for direct printing with UV inks, for photo frame, window, sunroof, transmission belt, especially in the automotive industry, wood industry or textile industry, antistatic additive, waterproof breathable product or film, active substance support, colorant, welding agent, decorative element, and/or polyamide additive, rail pad, pushchair component, wheel, handle, seat component, childhood car seat component, construction component, audio equipment component, acoustic insulation component and/or thermal insulation component, component for absorbing impacts and/or vibrations, such as those generated by a means of transport, smooth-running wheels such as a tyre, woven or nonwoven textile, wrapping, peristaltic belt, conveyor belt, synthetic skin and/or synthetic leather, hose component, especially of a flexible sheath, in the oil and gas industry, in particular in offshore applications, any applications requiring a material that is both hydrolysis-resistant and $CO_2$-permeable, and any article comprising a mixture of these articles.

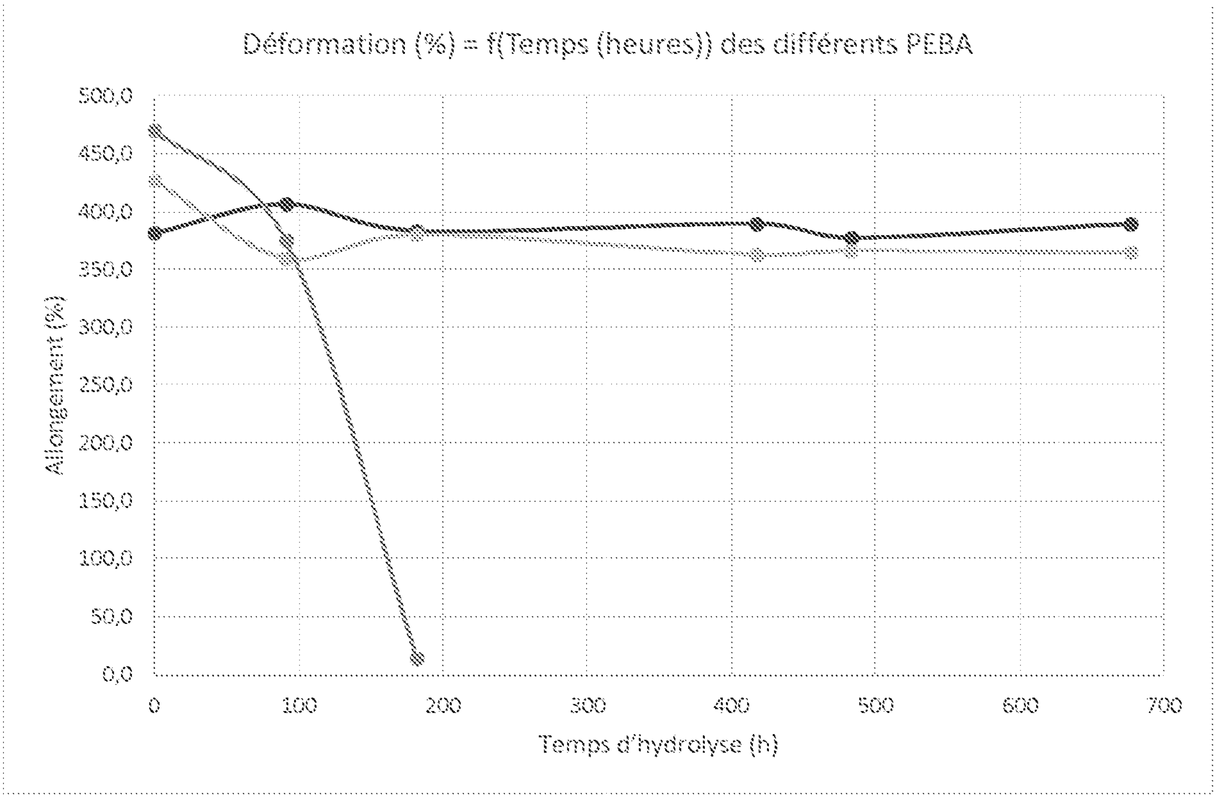
Déformation (%) = f(Temps (heures)) des différents PEBA
500,0
450,0
400,0
350,0
300,0
250,0
200,0
150,0
100,0
50,0
0,0
Allongement (%)
0
100
200
300
400
500
600
700
Temps d'hydrolyse (h)

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5331061 A
- US 6590065 B
- EP 613919 A
- JP 2004346274 B
- JP 2004352794 B
- EP 1482011 A
- FR 2846332
- JP HEI0362804 A
- US 6552131 B